(19) Europäisches Patentamt
European Patent Office
Office européen des brevets

(11) **EP 3 361 394 A1**

(12) **EUROPEAN PATENT APPLICATION**

(43) Date of publication:
**15.08.2018 Bulletin 2018/33**

(51) Int Cl.:
***G06F 17/30*** *(2006.01)*

(21) Application number: **17155703.6**

(22) Date of filing: **10.02.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **FUJITSU LIMITED
Kawasaki-shi Kanagawa 211-8588 (JP)**

(72) Inventors:
• LEE, Vivian
**Bracknell, Berkshire RG42 2QP (GB)**
• HU, Bo
**Winchester, SO23 7DT (GB)**

(74) Representative: **Haseltine Lake LLP
Lincoln House, 5th Floor
300 High Holborn
London WC1V 7JH (GB)**

(54) **DATA RECONCILIATION METHOD AND APPARATUS**

(57)     In the reconciliation of data items from distinct data sources, embodiments receive designations of pairs of data items considered to represent the same entity, and designations of pairs of data items which are not considered to represent the same entity. A mapping is established between attributes (i.e. schema-to-schema mapping) of the two data sources. An optimisation problem is formulated and solved, minimising a distance function between pairs of data items considered to represent the same entity while maximising the distance function between pairs of data items not considered to represent the same entity. The form of the distance function solving the optimisation problem yields a set of core attribute pairs (each pair being an attribute and its mapped equivalent from the other data source), which are used as the basis for a computationally efficient ongoing reconciliation process of the entirety of the data sources.

FIGURE 2

**Description**

The present invention lies in the field of data storage and data processing. In particular, embodiments relate to reconciling data items from disparate sources.

Entity Identifiers are crucial in order to form connections between data. This has become more and more important especially with the recent Open Data initiatives, which are encouraged by many governments in countries including U.S., U.K, and Japan. However, entity identification is subject to local variations. The entity identification problem in Open Data is still a relative new topic, see http://theodi.org/guides/data-identifiers-white-paper, not to mention the entity reconciliation solution in Open Data.

Inherited from Big Data's 3Vs nature (high volume, high velocity, high variety), the Open Data present similar challenges. This presents challenges in recognising data items from different sources representing the same entity.

To reconcile entity identifiers from heterogeneous data sources, a very common method is to use entity name as the mediator. However, the ambiguity of the names can severely affect the accuracy of the reconciliation result. This is because the names are composed in strings, which, when affected by social factors, a definitive or legally registered entity name could have multiple versions. This issue is exacerbated when data is multilingual.

When joining data items from disparate sources into a single data store, which is advantageous for data access and administration, storage space is wasted by storing multiple data items representing the same real world entity. Furthermore, performance overheads are incurred in distributed data stores by cross-hardware resource traversals for data items relating to the same entity.

Reconciliation processing aims to identify data items from disparate sources representing the same entity. Reconciliation processing has a performance cost in processing, and hence it is desirable to execute reconciliation processing in a processing-efficient manner.

Embodiments include: a computer-implemented method for reconciling data items from two distinct data sources, wherein each of the data sources comprises a plurality of data items representing respective entities with values of attributes from among a set of attributes forming a schema of the respective data source;. The method comprises: receiving a plurality of designations of pairs of data items that represent the same entity, each designated pair comprising a data item from each of the data sources; storing the designated pairs in a first storage area; obtaining a selection denoting comparable attribute pairs each comprising an individual attribute in the schema of one data source and a respective comparable individual attribute in the schema of the other data source; storing in a second storage area a set of data items from each of the two data sources as a negative set, the number of data items in each negative set being a predefined number of times larger than the number of pairs of data items stored in the first storage area; storing a data item distance metric calculator, configured to calculate a data item distance metric between two input data items, one from each data source, by, for each of a set of attribute pairs, calculating an attribute pair distance metric between the value of each of the attribute pair in the data item from the respective data source; and aggregating the attribute pair distance metrics by weighting with a respective attribute pair weighting and summing each of the attribute pair distance metrics; forming an optimisation problem with the attribute pair weightings as variables, the optimisation problem being: to minimise the data item distance metric between the designated pairs of data items in the first storage area as input data items, and to maximise the data item distance metric between a predetermined number of pairs of data items each comprising a data item from one of the data sources stored in the first storage area and a data item from the other of the data sources stored in the second storage area as input data items, using the data item distance metric calculator with each of the comparable attribute pairs from the mapping as the set of attribute pairs; solving the optimisation problem to arrive at an optimum set of attribute pair weightings; composing a set of core attribute pairs comprising each of the comparable attribute pairs from the mapping for which the optimum attribute pair weighting is either above a predefined threshold or among the top n optimum attribute pair weightings ranked by value; configuring the stored data item distance metric calculator by setting the individual weightings for the attribute distance metrics of the set of core attributes pairs to the respective optimum attribute pair weightings, and using the configured data item distance metric calculator with the set of core attribute pairs as the set of attribute pairs to calculate the data item distance metric between each of a list of reconciliation candidate pairs, each pair comprising one data item from each data source; and to reconcile the pair if the calculated data item distance metric is below a predefined threshold.

Advantageously, the method solves an optimisation problem to identify the attributes that have the most weight in distinguishing equivalent pairs of data items from non-equivalent pairs. In this way, a core set of attributes is identified for use in further reconciliation processing of the two data sources. In other words, a training procedure is used to find the most important attributes (from a reconciliation perspective), which most important attributes are used (in preference to using all attributes) in order to realise an efficient procedure for further reconciliation processing.

Advantageously, the method learns a new set of core attribute pairs for each application (i.e. for each reconciliation task) so that the same attributes that are determined to be members of the core set in one application may not be in another. It would be as a consequence of the input of the designated pairs, which is the input via which the method learns to recognise matches and hence membership of the core set, that the core set membership can vary across applications. As a consequence, two entities deemed matching in one application based on one selected subset of key features may be considered different in another application based on a different core feature set. From which perspective, the method can be described as dynamic with respect to being adaptive to different domains of application.

The method balances the need for accurate reconciliation processing with the need for computationally efficient reconciliation processing. Reconciliation processing that is too computationally expensive will take too long and therefore may not be performed at all, meaning that benefits of data reconciliation, such as better use of storage space and reduced cross-hardware resource traversals, are not realised.

The training procedure is the method steps required to configure the stored data item distance metric calculator. That is to say, once the data item distance metric calculator has been configured, it is trained for execution.

Once trained, the data item distance metric calculator can be used in-storage to reconcile data items or to validate reconciliation already executed by another reconciliation procedure.

Embodiments may leverage manual input in the training procedure, specifically in the designation of designated pairs that represent the same entity, and also in the mapping of attributes from the two schema. Embodiments effectively capture the manual input in the configuration of the data item distance metric calculator, which is then reproduced in an automated manner by the execution of the data item distance metric calculator on reconciliation candidate pairs, so that manual (i.e. from a domain expert) input is limited, but the effect thereof is unlimited.

The practicality of the step of obtaining designated pairs is based on two rationales. Firstly, users have enough domain knowledge to choose a small set of data item pairs of one data item from each data source (data model items) that are to be reconciled (i.e. that represent the same entity); this small set can represent the entire entity space that is to be investigated. Secondly, the chosen set of designated pairs is sufficiently small to enable manual scrutiny and alignment.

Attributes may also be referred to as concepts, properties, features, or fields, and are instantiated by values, which values differentiate one entity from another, an entity being represented by a data item comprising values of a set of attributes. Let $A_a$ and $A_b$ be the attribute sets of entity a and b respectively. If for every element in $\forall x \in A_a (\exists y \in A_b \land y = x) \to a = b$, b is considered a reconciliation candidate of a.

The set of core attributes is a subset of attributes that, in the context of a domain or an application or a pair of data sources, is determined to have higher indicating/defining strength than other attributes. The core set is not fixed. It varies among different domains and applications, and even within a particular domain or application may vary between different selections of two data sources.

Embodiments are particularly beneficial in usage scenarios in which:

- The datasets to be subject to reconciliation processing are attributed and the attributes are of a substantial number, therefore, it is either too expensive to exhaust all the attributes in reconciliation or not practical to obtain the entire list of attributes. The latter case may be due to a dynamic schema which changes over time; and/or
- Attributes of datasets are of different significances. Such a difference can be quantified and represented with a weighting mechanism.

Based on these two assumptions, the computer-implemented method identifies a "core" subset from among a plethora of attributes and assigns each of the attributes a numeric weight that is used in a data reconciliation process or validation thereof.

Optionally, one of the data sources is a distributed data source comprising data items stored in a distributed manner across a plurality of physically distinct data storage units; and reconciling the pair comprises adding to the distributed data source in the same data storage unit as the one of the pair of data items from the distributed data source, the data item from the other data source.

Advantageously, the computer-implemented method identifies when two data items are sufficiently related that they contain information likely to be accessed in the same operation, and therefore ensures that copies of both data items are stored on the same physical data storage unit. Performance overheads incurred by cross-data storage unit accesses are reduced.

Reconciliation processing is a procedure for identifying pairs of data items that are to be reconciled; reconciling a pair of data items is the processing performed on two data items once it has been determined that the two data items are to be reconciled.

Furthermore, it may be that, upon reconciling the pair the attribute values from the data item from the other data source are mapped to attributes in the schema of the distributed data source according to the mapped attribute pairs in a mapping; the mapping being obtained from a user-defined list of equivalent attribute pairs, each equivalent attribute list comprising one attribute from the schema of each data source.

Optionally, the user-defined list of equivalent attribute pairs is also used as the selection of comparable attribute pairs. The mapping is manually input, noting that the mapping is defined for the schema of the two data sources and hence does not need to be defined on a data-item-by-data-item basis

Optionally, the method further comprises: extracting data items from both of the two distinct data sources and writing the extracted data items to a combined database; wherein reconciling the pair comprises adding the pair of data items to the combined database as a single consolidated entry.

Advantageously, consolidating the two data items into a single entry reduces the storage space required to combine the data sources. The mapping gives the user control over which attribute from one data source matches to which attribute in the other in the consolidation.

Optionally, the user may also be presented with the option of which value to retain in the consolidation (i.e. if both data items have values of attributes mapped to one another, which value is retained and which is discarded). In particular:

Optionally, writing the pair of data items to the combined database as a single consolidated entry comprises, when only one or the other of the data items have a value for an attribute of a mapped attribute pair from the mapping, writing the value to the equivalent attribute in the combined database, and, when both data items have a value for a mapped attribute pair from the mapping, receiving a selection of one from the two values and writing the selected one value to the combined database; or writing the pair of data items to the combined database comprises writing a separate entry for each data item, and replacing physical data of one of the entries with a physical or logical link to the other.

The user is a user of a computing apparatus implementing the computer-implemented method. The user may be a local user of the computing apparatus or may be remote. For example, user inputs are received via a user interface such as a graphical user interface.

Optionally, the selection of comparable attribute pairs is every permutation of attribute pairs comprising one attribute from the schema of each data source; or the selection of comparable attribute pairs is a user-defined, by a user of the computer implementing the method, selection of equivalent attribute pairs, each equivalent attribute pair comprising an attribute from the schema of one data source and a semantically equivalent attribute from the schema of the other data source.

Advantageously, if the selection of comparable attribute pairs is every permutation, then any attribute pair for which distance between respective values contributes to a determination of whether two data items match or do not match will be revealed in the optimisation. Any attribute pairs could be present in the set of core attributes. No manual input is required, although the computational cost of optimisation is higher than with the constrained selection of comparable attribute pairs.

If the selection of comparable attribute pairs is constrained to attribute pairs considered to be matching by the user, then it is only those attribute pairs whose distance metrics are varied in the optimisation, and the membership of the core set is constrained to being a subset of the attribute pairs considered to be matching by the user. Manual input is required, and the computational cost of optimisation is kept low.

Furthermore, the method may include setting the user-defined equivalent attribute pairs as the mappings.

Advantageously, the manual input of the equivalent attribute pairs can be used in two steps of the method, firstly as the comparable attribute pairs in the optimisation problem, and secondly to determine which attribute values from one data item are combined with which attribute values of another data item in the consolidation of two data items. Advantageously, the overall level of manual input is kept to a minimum, whilst allowing the domain knowledge of the user to be leveraged to yield accurate results with low computational cost.

Optionally, the designated pairs are manually designated by a user of the computer implementing the method.

The designated pairs are used to train (configure) the data item distance metric calculator. A small amount of user input is leveraged to provide a data item distance metric calculator that can be executed on large-scale databases without requiring further manual input.

The method may further comprise: extracting the data items from the two data sources and storing the extracted data items in a cache memory; wherein storing data items in the first storage area and storing data items in the second storage area comprises reading the data items from the cache memory and writing the data items into a persistent data storage hardware resource.

Making data items from multiple data sources accessible in a single combined database is advantageous due to, for example, a single access system. Furthermore, one entity may wish to preserve data over which they have no administrational control until a copy of the data is made and stored. In such implementations, a data extractor (which is, for example, a processor, memory, and input/output mechanism) provides a means to access the data items from their respective native data sources and store them for entry in the new combined database.

In terms of system architecture, the computer-implemented method may fit into an architecture as a principal reconciliation process, or as a means of validating another reconciliation process. In a first example:

In one example, the list of reconciliation candidate pairs is all permutations of data item pairs comprising one data item from each of the two data sources.

In a second example: the list of reconciliation candidate pairs is pairs of data items, comprising one data item from each of the two data sources, denoted as equivalent to one another by an initial reconciliation process.

The initial reconciliation process may be an existing reconciliation process for determining which pairs of data items are semantically equivalent from two populations of data items (i.e. from two data sources). For example, the initial reconciliation process may be the reconciliation process disclosed in United Kingdom patent application publication number GB2536898, the publication of United Kingdom patent application number GB1505427.3.

Preferred features of the present invention will now be described, purely by way of example, with reference to the accompanying drawings, in which:-

Figure 1 illustrates a computer-implemented method;
Figure 2 illustrates a system architecture;
Figure 3 illustrates a functional schematic of a computing apparatus; and
Figure 4 illustrates a hardware configuration.

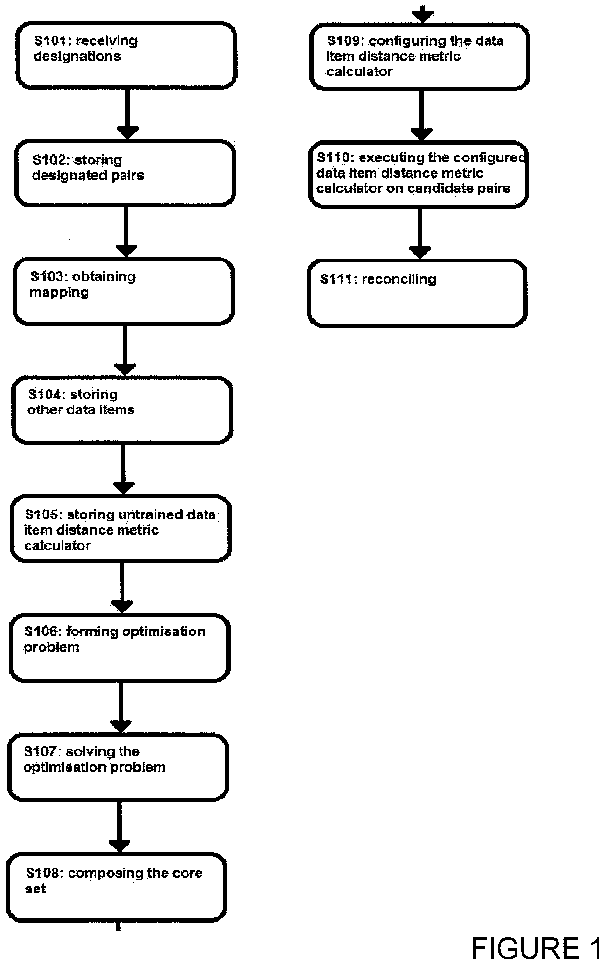

Figure 1 illustrates the steps in a computer-implemented method for reconciling data items from two distinct data sources, wherein each of the data sources comprises a plurality of data items representing respective entities with values of attributes from among a set of attributes forming a schema of the respective data source. The data sources are distinct insofar as they separate databases of information, each with their own schema, noting, of course, that there may be some overlap in the respective schema. The data sources may be sources of linked open data (LOD) or other forms of open data. Optionally, the computer-implemented method may include reading the data from their native sources and writing to a single aggregated database, thus making data items from the disparate sources accessible via a single access point (i.e. DBMS).

Steps S101 to S105 may be considered pre-processing or pre-training steps, and may be performed in various orders and with certain steps performed in parallel. Step S101 precedes step S103.

At step S101, a plurality of designations of pairs of data items that represent the same entity are received, wherein each designated pair comprising a data item from each of the data sources. The designations may be manually input to a program controlling the computer-implemented method, for example, via a user interface or by inputting a data file. The designations may be derived from a reconciliation process external to the present computer-implemented method, and confirmed manually, for example, by an expert in the knowledge domain of the data. The designated pairs are used to train the data item distance metric calculator, and as such may be considered a training set of data item pairs. The size of the set may be, for example, between 50 and 100 pairs, and should be small in comparison to the number of data items (which may number at least several hundreds or in the thousands or more) in the respective data sources. The form of the designations may vary, and may be, for example, copies of the data items along with an indication of equivalence, or may be identifiers for the respective data items allowing them to be identified among the data items in their respective data sources along with an indication of equivalence. The indication of equivalence is an indication that the pair of data items represent the same entity, noting that the indication may implied by the fact that the two data items have been designated as a pair, rather than an explicit indication.

At step S102, the designated pairs are written to a first data storage area (DSA) 102. The first data storage area is a data storage hardware resource or resources operable to store data items in the respective native schema of the data sources of the data items, along with an indication of which pairs of data items have been designated pairs.

At S103 a selection is obtained which denotes comparable attribute pairs each comprising an individual attribute in the schema of one data source and a respective comparable individual attribute in the schema of the other data source. Comparable is taken to mean that the values of the two attributes are to be compared in the optimisation problem. Optionally, the selection is a user-defined selection of equivalent attributes representing the same property or concept of entities represented by the data items, thus, the number of variables in the optimisation problem is constrained to the number of user-defined attribute pairs. In an alternative implementation, the selection is each permutation of pairs of attributes from the schema of the respective data sources. The number of variables in the optimisation problem is hence the number of said permutations.

An attribute is, for example, a labelled column in a relational database or a concept in a graph database. Data items comprise values of attributes, which in the case of relational data is a column entry, and in the case of graph data is a vertex or node instantiating the concept. The mapping may be obtained by manual input, for example, via a user interface operable to present a list of attributes (i.e. names or labels of attributes) from the respective data source schema and accept user inputs of indications of pairs of attributes equivalent to one another across the two schema. The mapping does not need to be exhaustive (but may be), but should satisfy a minimum number of attribute pairs, for example, five, ten, twenty, or more, depending on the total number of attributes in the respective schema, the level of accuracy sought in the reconciliation processing, and the available processing capability.

At step S104 storing in a second storage area 103 a set of data items from each of the two data sources (as a negative set), the number of data items in each negative set being a predefined number of times larger than the number of pairs of data items stored in the first storage area. The data items in the negative sets need no manual input for their selection, and may be random selections from the data sources, excluding data items stored in the first storage area. Alternatively, one or more attributes may be highlighted by a user as defining attributes, and the method may comprise selecting data items for storage as the negative sets for the respective data sources with a distribution of values of the defining attribute(s) that is consistent with the distribution of values of the defining attribute(s) in the population of data items in the respective data source.

At step S105 an untrained version of the data item distance metric calculator is initiated with default values for attribute pairs and stored. Specifically, step S105 comprises storing a data item distance metric calculator, configured to calculate a data item distance metric between two input data items, one from each data source, by, for each of a set of attribute pairs, calculating an attribute pair distance metric between the value of each of the attribute pair in the data item from the respective data source; and aggregating the attribute pair distance metrics by weighting with a respective attribute pair weighting and summing each of the attribute pair distance metrics. The stored version of the data item distance metric calculator resulting from S105 has not yet been tailored to any particular attributes nor trained to weight respective attribute distances with particular weightings. In other words, the data item distance metric calculator stored at step S105 is generic.

Steps S106 to S109 set out a technique for tailoring the generic data item distance metric calculator to the two data sources, by setting the comparable attribute pairs as the set of attribute pairs. Furthermore, the technique of steps S106 to S109 trains the tailored data item distance metric calculator to combine distances between values of comparable attribute pairs (i.e. equivalent attributes such as "Name" from data source 1 and "Name" from data source 2) with particular weightings in order to generate a single value representing a distance between the two data items (which can be considered inverse of a confidence level in two input data items representing the same entity).

At step S106, an optimisation problem is formed with the attribute pair weightings as variables, the optimisation problem being: to minimise the sum of the data item distance metrics (i.e. the single values representing distance between two input data items) between the designated pairs of data items in the first storage area as input data items (because they are designated as equivalents), and to maximise the sum of the data item distance metrics between a predetermined number of pairs of data items each comprising a data item from one of the data sources stored in the first storage area and a data item from the other of the data sources stored in the second storage area as input data items, using the data item distance metric calculator with each of the comparable attribute pairs from the input selection as the set of attribute pairs. Forming the optimisation problem may be, for example, initiating a full matrix (in the case of the selection of comparable attribute pairs being every pair permutation across the two schema) or a diagonal matrix (in the case of the selection of comparable attribute pairs being the user-defined selection of equivalent attributes) with default values for attribute pair weightings (i.e. the matrix comprising a row per attribute from one data source schema and a column per attribute from the other data source schema, in the particular example of the user-defined selection, the comparable attribute pairs appearing in the same place in the respective order of columns/rows), and selecting from a set of predefined set of attribute distance metrics an attribute distance metric for each comparable attribute pair. For example, the selection may be based on data type of values of the attribute, wherein an attribute distance metric is provided for string values, another for numeric values, another for time series, another for times/dates. The attribute distance metrics transform two values into a single value representing a distance between the two values. For example, said single value may be constrained to being between 0 and 1.

The optimisation problem formed in S106 is a converging function in the case of the diagonal matrix. At S107, the optimisation problem is solved to arrive at an optimum set of attribute pair weightings. Efficient algorithms for solving optimisation problems of the form of that formed in S106 exist in the state of the art and can be utilised in step S107. The method may use a gradient method to adjust the weights of features so as to minimise the cost function. The cost function in this case being the sum of data item distance metrics, i.e. a function which rewards positive pairs and penalises negative pairs.

At steps S108 and S109 the results of the optimisation are used to generate a new version of the data item distance metric calculator for execution, with attribute pair weightings calculated by solving the optimisation problem, and a reduced set of attribute pairs determined based on said calculated attribute pair weightings.

In particular, S108 comprises composing a core set of attribute pairs comprising each of the comparable attribute pairs from the selection of comparable attribute pairs for which the optimum attribute pair weighting is either above a predefined threshold or among the top n optimum attribute pair weightings ranked by value. The selection of n may be default, for example, ten, fifteen or twenty, depending on the total number of attributes in the respective schema, the level of accuracy sought in the reconciliation processing, and the available processing capability, or n may be selected by a user of the computer.

At step S109, the new version of the data item distance metric calculator for execution is generated by configuring the stored generic data item distance metric calculator with the core set of attribute pairs as the set of attribute pairs, and the attribute pair weightings for the respective attribute pairs being those calculated as optimum attribute pair weighting for the respective pair by the solving of the optimisation problem. In particular, step S109 comprises configuring the stored data item distance metric calculator by setting the individual weightings for the attribute distance metrics of the core set of attributes pairs to the respective optimum attribute pair weightings.

At step S110, the configured version (i.e. trained version) of the data item distance metric calculator is executed on candidate pairs of data items to identify pairs of data items for which the calculated data item distance metric (i.e. the single value representing distance between two input data items) is above a threshold. The candidate pairs of data items may be those identified as equivalent by a reconciliation process external to the method for which validation is desired, or may be all permutations of data item pairs (with the constraint that the pair comprises one data item from each data source) so that the execution is a first pass reconciliation process.

The output of the data item distance metric calculator, per input pair of data items, is a single value representing distance between two input data items. Depending on the implementation, it may be that the data item distance metric calculator is configured to either invert, or subtract from a fixed value, the single value representing distance, so that the output is in fact a single value representing confidence in the assertion that the data items represent the same entity. It should be assumed, unless otherwise stated, in the examples presented that the output of the data item distance metric calculator is a single value representing distance, and may take a range of values from low (representing data items that are close) to high (representing data items that are not close). The range of values may be, for example, from 0 to 1.

At S110, the configured data item distance metric calculator with the core set of attributes pairs as the set of attribute pairs is used to calculate the data item distance metric between each of a list of reconciliation candidate pairs, each pair comprising one data item from each data source. At step S111, the pair of data items are reconciled if the calculated data item distance metric is below a predefined threshold. The threshold may be predefined on the computer implementing the method or may be defined by a user prior to initiating the computer-implemented method, for example, as a parameter or argument.

The reconciling may take a number of forms, depending on implementation. In one example, the computer-implemented method is used in a procedure for joining the data items from two data sources into a single distributed database, and the reconciling comprises adding the pair of data items to be reconciled to the same partition of the database (a partition being a physically distinct storage area for a portion of the database, the database being stored in a distributed manner on a plurality of physically distinct storage areas each storing a different area of the database). It is noted that, whereas the limit of physical proximity of two reconciled data items may be the same physical data partition, it is also possible that the two data items be stored in the same or adjacent physical data storage address(es). Alternatively, an upper limit on the distance between two reconciled data items in terms of physical address can be predefined and adhered to in the reconciling. Optionally, the pair of data items may be consolidated into a single data item, in which case, upon reconciling the pair the attribute values from the data item from one data source are mapped to attributes in the schema of the other data source according to the mapped attribute pairs in the mapping. For example, one data source may be denoted as a master, so that either: values of attributes from the master data source take priority over the other; or so that both entries are written to the consolidated database, but whereas the master stores physical data, the entries from the other data source store a physical or logical reference to the corresponding entry from the master. Consequently, less data storage is required to maintain the reconciled and joined/consolidated data in a database. Furthermore, performance overheads incurred by database accesses are reduced due to quicker access to a single joined or consolidated data item or entry. Furthermore, performance overheads incurred by database accesses to physically distributed databases are reduced due to storing closely semantically-related data items in close physical proximity to one another.

The computer-implemented method may include extracting data items from both of the two distinct data sources and writing the extracted data items to a combined database, thereby making the data items from both data sources accessible via a single access point. In such methods, reconciling the pair at step S111 comprises adding the pair of data items to the combined database as a single consolidated entry. Upon consolidating the pair the attribute values from the data item from one data source are mapped to attributes in the schema of the other data source according to the mapped attribute pairs in the mapping. For example, one data source may be denoted as a master, so that values of attributes from the master data source take priority over the other. For example, the schema of the master may be used in the combined database.

In any of the methods in which the pair of data items to be reconciled are written to a database as a single consolidated entry, step S111 includes, when only one or the other of the data items have a value for an attribute of a mapped attribute pair from the mapping, writing the value to the equivalent attribute in the combined database, and, when both data items have a value for a mapped attribute pair from the mapping, receiving a selection of one from the two values and writing the selected one value to the combined database. The selection may be according to which data source is allocated as a master by a user, or may be selectable by a user via a user interface on a per-attribute basis.

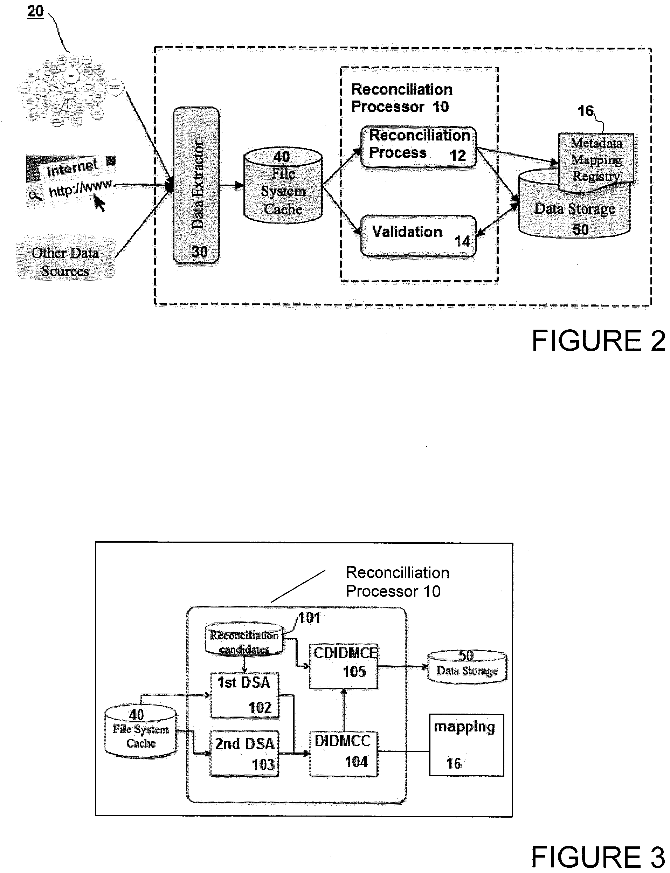

Figure 2 illustrates a system architecture in which a computer-implemented method of an embodiment is performed. In a first example, the computer-implemented method is performed by the reconciliation process 12. In such a first example, there is no separate validation process 14. In a second example, a first reconciliation process is executed by the reconciliation process 12, such as the reconciliation process disclosed in United Kingdom patent application publication number GB2536898, the publication of United Kingdom patent application number GB1505427.3, and the computer implemented method is performed by the validation process 14. The steps S101 to S111 of Figure 1 are performed whether the method takes the form of a reconciliation process (i.e. an initial reconciliation process) or a validation of an already-performed reconciliation process. The distinction is the identity of the reconciliation candidate pairs at S110. In the former scenario, the reconciliation candidate pairs are every permutation of data item pairs comprising one data item from each of two data sources, in the latter scenario, the reconciliation candidate pairs are a set of data item pairs selected for reconciling by a previously-performed reconciliation process.

The data sources 20 are any two distinct data sources storing data items having some overlap in terms of the entities and attributes thereof represented by the data items. The computer-implemented method operates on pairs of data sources, noting, of course, that once two data sources have been processed by the computer-implemented method and stored as a combined database, the combined database can serve as a data source for a new execution of the method.

The data sources in the architecture can be any Open Data source, e.g. Linking Open Data (http://lod-cloud.net/), DBPedia (dbpedia.org), etc., or data that is publicly available on the Internet. The data sources may be private, on the assumption that the data extractor 30 has access rights.

The data extractor 30 is a data I/O mechanism configured to read data items from respective native data sources for storage in a combined database 50. The data extractor 30 may perform some parsing and pre-processing of the data items. Rather than simply writing the extracted data items directly to the combined database 50, the data items are subjected to reconciliation processing by the reconciliation processor 10. Therefore, the data extractor writes the extracted data items to the file system cache 40, from where they are accessible by the reconciliation processor 10.

The file system cache 40 is a data storage hardware resource storing the data from the two data sources 20 in their native schema pending processing by the reconciliation processor 10.

In both the first and second examples, the computer-implemented method of an embodiment is implemented by the reconciliation processor 10; the reconciliation processor 10 being a hardware arrangement comprising a CPU, memory, and a data I/O unit. The memory stores processing instructions and data, the CPU executes processing operations on the data (and reads/writes the data to/from the memory) and the data I/O unit reads data into the memory from user interfaces and external data sources and writes data from the memory to external databases and other destinations.

In the first example, the computer-implemented method of Figure 1 is executed as the reconciliation process 12 by the reconciliation processor 10, and there is no separate validation process 14. In the second example, the computer-implemented method of Figure 1 is executed as the validation process 14 by the reconciliation processor 10 to validate the results of a separate reconciliation process 12.

In the first example, the list of reconciliation candidate pairs is all permutations of data item pairs comprising one data item from each of the data sources (noting that the data item pairs stored in the first storage area 102 at step S102 can be excluded from such processing and simply stored in preparation for reconciling at S111).

In the second example, the pairs of data items selected for reconciliation by the separate reconciliation process 12 are stored in the data storage area for reconciliation candidates 101 as the list of reconciliation candidate pairs for processing by the validation process 14 once the data item distance metric calculator has been configured by steps S101 to S109.

The data storage 50 is a combined database into which the data items extracted from the two data sources 20 are written following the execution of steps S110 and S111, executing the configured data item distance metric calculator on the candidate data item pairs, determining which data item pairs to reconcile, and performing the reconciliation. The data item pairs to reconcile includes those designated as pairs and stored in the first storage area, and also pairs of data items from among the candidate data item pairs and for which the distance metric value output by the configured data item distance metric calculator at step S110 is below the predefined threshold value.

The metadata mapping obtained at step S103 by the reconciliation processor 10 is stored by the reconciliation processor and/or by the data storage 50 in the metadata mapping registry 16, noting that the mapping is used both for tailoring and configuring the generic version of the data item distance metric calculator (as the user-defined selection of comparable attribute pairs), and for combining the data items into a single database.

Figure 3 illustrates a schematic functional diagram of the reconciliation processor 10.

The mapping 16 is illustrated as external to the reconciliation processor 10 but may be stored by a memory of the reconciliation processor 10, or stored externally to but accessible by the reconciliation processor 10. The reconciliation processor 10 is exemplary of a computing apparatus of an embodiment.

The mapping 16 stores mappings of fields (attributes) between the two data sources. The mappings may be manually input to the reconciliation processor 10, for example, by a user of the computer implementing the method (noting that said user may be a local or remote user). The mapping 16 may be in the form of a registry.

The mapping 16 stores mappings of attributes between data sources. These fields (also called data models or schema) are mapped manually. They are from different data sources, but share the same semantic meaning, and potentially the same data types. An example of such mapping is shown in the following table (the data source names are CIK_DS and LEI_DS respectively, and a restricted number of attributes is shown for illustrative purposes):

| CIK_DS | Name | Address | PostCode | Country | Industry Code |
|--------|------|---------|----------|---------|---------------|
| LEI_DS | Registered Name | Add | ZipCode | Place | IS Number |

The first data storage area DSA 102 stores designated pairs of data items that are deemed, for example by a user, to represent the same entity. The first data storage area 102 includes a pair designation interface for receiving the pair designations from the user. Each designated pair of data items comprises one data item from each of the two data sources. The mapping may be used as the selection of comparable attribute pairs, and may be used for consolidating two data items from their respective data sources into a single data item in the data storage 50.

The designated pairs may be user-designated pairs of data items from the different sources. Use CIK_DS and LEI_DS as example, these entities are the rows from both data sources with all the attributes from the original files, whose values are deemed to represent the same entity. E.g. the row Ri in CIK_DS, whose Name = Fujitsu Ltd. is matching to the row Rj in LEI_DS, whose Registered Name = Fujitsu Limited. Optionally, the user selected designated pairs may be generated by a separate reconciliation process (i.e. reconciliation process 12 in the second example) and manually sorted by either selecting for use as a designated pair or rejecting from further use, for example, such sorting being performed by a user via an interface.

The data items stored in the second data storage area 103 may be referred to as negative sets, because they are assumed not to represent the same entities as the data items from the respective opposing data source (i.e. the other data source than the native data source of the data item in question) stored in the first data storage area 102. A negative set is formed of data items from each data source. The number in each set is implementation specific, and to some extent depends on the number of designated pairs. A user-defined parameter may be the number of times greater the number of non-matching pairs is than the number of matching pairs. The matching pairs is the designated pairs. The non-matching pairs are one data item from one data source stored in the first data storage area (i.e. a member of a matching pair) and a data item from the negative set of the other data source. Therefore, it is only necessary that the number of non-matching pair permutations satisfy the user-defined parameter, rather than there necessarily being a large number of data items in the respective negative sets. For example, the user-defined parameter may be 7.

The data items forming the respective negative sets can be randomly chosen from the respective data sources. Optionally, one or more attributes may be selected which are to be represented by distributions in the negative set that approximately match the distribution in the population of data items in the respective native data source, to avoid skewed results. The distribution is achieved through a fair distribution of their attribute values. For instance, if "age" is an attribute of the data item, the system should ensure that the selection of negative set data items reflects the distribution of age in the data source as a whole.

Alternatively, the non-matching pairs may be formed of one member from each negative set. In such implementations, the number of data items in the negative sets needs to be at least sufficient that the permutations of cross-negative set pairs can satisfy the user-defined parameter.

The data item distance metric calculator controller 104 stores the data item distance metric calculator, formulates and solves the optimisation problem, and configures the data item distance metric calculator using the outcome of the solved optimisation problem. The optimisation problem is formed based on the selection of comparable attribute pairs, which may be user-defined comparable attribute pairs or may be each possible permutation of comparable attribute pairs, in either case each comparable attribute pair comprises one attribute from the schema of each of the two data sources. Effectively, the optimisation problem is to find a weighting for each of the comparable attribute pairs using the data item distance metric calculator. The data item distance metric calculator is stored in a generic form, in which it is operable to weight distances between respective values of attribute pairs with arbitrary weightings for an arbitrary set of attribute pairs. The data item distance metric calculator is tailored to operate on the comparable attribute pairs, by setting a weighting for each of the mapped attribute pairs to an "untrained" value, such as 1. The solving of the optimisation problem is effectively a weight learning process, and sets weightings for each of the attribute pairs.

An example of the forming and solving of the optimisation problem will now be set out.

The target of the optimisation problem is to find a weighting matrix W that will minimise the sum of distances between data items in designated pairs (i.e. stored in the first storage area) while maximising the sum of distances between non-matching pairs (pairs comprising one data item from each data source and one from each data storage area; or one data item from each negative set) as indicated in the following exemplary equation, where distance is computed using the following equation. The distance metric is formalised in the following equation:

$$\min_{W}\left(\sum_{\langle i,j\rangle\in S_+}(A_i - A_j)^T W(A_i - A_j) - \beta\log\left(\sum_{\langle m,n\rangle\in S_-}\sqrt{(A_m - A_n)^T W(A_m - A_n)}\right)\right)$$

Where $(A_i - A_j)$ and $(A_m - A_n)$ is defined below, i and j are matching data items (i.e. a designated pair), and m and n negative data items (i.e. a non-matching pair).

$(A_i - A_j)$ and $(A_m - A_n)$ are the distances between sets of comparable attribute pairs calculated by the data item distance metric calculator, which are converted into a single value by multiplication by the weighting matrix. So, $(A_i - A_j)$ and $(A_m - A_n)$ are sets of distance metrics between values of attribute pairs. The distance metric between two data items is a weighted combination (i.e. sum) of distance metrics for attribute pairs. i.e. the data item distance metric calculator is configured to calculate a distance metric between two data items by, for each comparable attribute pair having a value in both data items, comparing the values using the attribute pair distance metric for the respective pair, weighing the value using the respective weighting, and adding to the sum.

In the optimisation problem, the weighting matrix may be a diagonal weighting matrix W, and hence the objective function converges. This relies upon knowing which attributes from the respective schema are to be compared with one another by the data item distance metric calculator, and hence the diagonal weighting matrix is implemented when the selection of comparable attribute pairs is a user-defined selection of equivalent pairs. Efficient solutions of the optimisation problem exist in distance metric learning area.

The resultant W generated by solving the optimisation problem presents an optimum set of weightings for attribute pairs (the rows of the matrix represent the attributes of one data source and the columns the attributes of the other, ordered so that attributes appearing in the same comparable attribute pair as one another appear in the same position in the rows/columns).

For instance, as input the weighting matrix can be initialised to 1 for all the items as:

$$W = \begin{bmatrix} 1 & \cdots & 0 \\ \vdots & \ddots & \vdots \\ 0 & \cdots & 1 \end{bmatrix}$$

After solving the optimisation problem, the weighting matrix can take the following form where initial values are adjusted as variables in the optimisation problem to reflect the optimal solution that can reduce the data item distance metric calculated for matching pairs while increasing the data item distance metric calculated for non-matching pairs.

$$W = \begin{bmatrix} 0.8846 & \cdots & 0 \\ \vdots & \ddots & \vdots \\ 0 & \cdots & 0.1735 \end{bmatrix}$$

By solving the optimisation problem, a weighting matrix is obtained. Elements of the weighting matrix calculated by solving the optimisation problem are considered the optimal weight of each attribute pair. This weight assignment can then be used to validate further data reconciliation results.

As an alternative to the diagonal matrix, a full matrix can be used. Again, the rows of the matrix represent the attributes of one data source and the columns the attributes of the other, but in this case there is no knowledge of equivalence between attributes in the respective schema, and hence every permutation of attribute pairs (one attribute from the schema of each data source) is compared by the data item distance metric calculator. If W is relaxed to a non-diagonal matrix, the optimal solution can provide the best matching attributes from all permutations, hence to determine mappings between attributes or to validate the obtained user-defined mappings. For instance, let A = {$a_0$, $a_1$, $a_2$} and B = {$a_3$, $a_4$, $a_5$, $a_6$}, we have square diagonal matrix to represent the distance of A and B as, where $a_0$, ..., $a_6$ are attributes of A and B, respectively and $\Delta(a_0, a_0) = 0$

$$(A - B) = \begin{bmatrix} \Delta(a_0, a_3) & \cdots & \Delta(a_0, a_6) \\ \vdots & \ddots & \vdots \\ \Delta(a_2, a_3) & \cdots & \Delta(a_2, a_6) \end{bmatrix}$$

Function $\Delta(\cdot)$ is an attribute pair distance metric calculator for projecting two attribute values to a real number preferably between 0 and 1 (exemplary of an attribute pair distance metric). Many existing distance measures can be used in the optimisation problems as the attribute pair distance metrics e.g. standard or optimised string distance measures. Optionally, for attribute pairs with values of different data types, for example, text and numeric, the attribute pairs distance metric may be set to 0. When the value is greater than 1, it can be normalised across the entire row. Also $\Delta(\cdot)$ is a symmetric function. As in the case of the diagonal matrix, the optimisation problem is to use the weighting matrix to minimise the sum of distances between matching pairs and maximise the sum of distances between non-matching pairs. This will allow a full attribute space search for the optimal solution of W.

Once the weighting matrix has been calculated, a set of core attribute pairs is selected based on the calculated weightings, in accordance with step S108. In summary, the attribute pairs having the greatest n weightings, or all attribute pairs having weightings above a threshold minimum value, are selected as members of the set of core attribute pairs. The data item distance metric calculator is configured to calculate data item distance metric between two input data items based on values of the set of core attribute pairs using the respective weightings calculated by solving the optimisation problem. The result is the configured data item distance metric calculator for execution by the executor 105, which is a processor configured to execute the configured data item distance metric calculator on candidate pairs of data items in order to identify data item pairs to be reconciled with one another.

The list of reconciliation candidates (pairs of data items one from each data source) is processed by the configured data item distance metric calculator 105 to generate a distance metric per reconciliation candidate pair. For instance, the reconciliation candidate pairs may be selected by another reconciliation process, and validated by the configured data item distance metric calculator. The calculated data item distance metric value of reconciliation candidates is $c(\langle A,B \rangle) = \sum_i \omega_i \cdot c(a_i, b_i)$, where $a_i$ and $b_i$ are the attributes of A and B, respectively. The outcome can be twofold. The calculated distance may be above a predefined threshold (based on domain heuristics, for instance), showing that the data items are too far apart to be reconciled. In this case, such candidates may be rejected or be subject to further investigation. When there are multiple candidates of the same data item, the validate module can rank such candidates based on the newly computed overall confidence to filter out the best candidates.

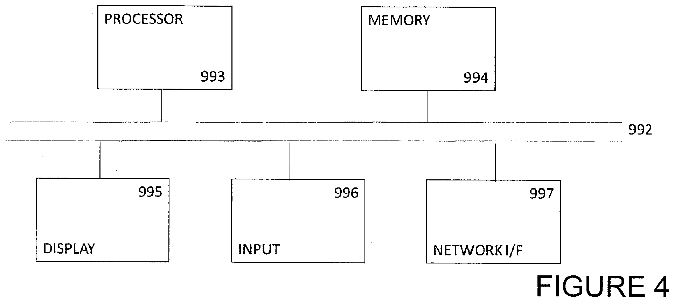

FIGURE 4 is a block diagram showing a hardware configuration of a computing device, exemplary of the computing apparatus mentioned elsewhere in this document, such as a reconciliation processor 10 of Figures 2 & 3, and which may be used to implement a computer-implemented method of Figure 1. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of the reconciliation processor 10 described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The first data storage area and pair designation interface 102 of Figure 3 may be a processor 993 (or plurality thereof) executing processing instructions (a program) stored on a memory 994 and exchanging data with a user and other components via a network I/F 997 or other input/output mechanism. In particular, the processor 993 executes processing instructions to receive, via the input/output mechanism, designations of matching pairs of data items from a user of the computing device, and store the designated pairs, as in steps S101 & S102 of Figure 1. Furthermore, the processor 993 may execute processing instructions to store the designated pairs on a connected storage unit and/or to transmit, via the input/output mechanism, the designated pairs to the data item distance metric calculator controller 104 for processing in the optimisation problem.

The second data storage area 103 of Figure 3 may be a processor 993 (or plurality thereof) executing processing instructions (a program) stored on a memory 994 and exchanging data with a user and other components via a network I/F 997 or other input/output mechanism. In particular, the processor 993 executes processing instructions to select a negative set of data items from each of the two data sources and to import, via the network I/F (which may be implemented by the data extractor 30 extracting data items from the data sources and writing them into the file system cache 40), a set of data items denoted a negative set from each of the data sources and store said sets, as in step S104 of Figure 1. Furthermore, the processor 993 may execute processing instructions to store the sets of data items on a connected storage unit and/or to transmit, via the network I/F 997 or other input/output mechanism, the sets of data items to the data item distance metric calculator controller 104 for processing in the optimisation problem.

The reconciliation candidates storage area 101 of Figure 3 may be a processor 993 (or plurality thereof) executing processing instructions (a program) stored on a memory 994 and exchanging data via a network I/F 997 or other input/output mechanism. In particular, the processor 993 executes processing instructions to receive and store a list of reconciliation candidate pairs, either by extracting all pairs of data items from the data sources, for example, via the data extractor 30 of Figure 2, or by receiving a list of reconciliation candidate pairs for processing by the data item distance metric calculator as validation of a result from another reconciliation process. Furthermore, the processor 993 may execute processing instructions to store the list of reconciliation candidate pairs on a connected storage unit and/or to transmit, via the network I/F 997 or other input/output mechanism, the reconciliation candidate pairs to the configured data item distance metric calculator executor for reconciliation processing.

The data item distance metric calculator controller 104 of Figure 3 may be a processor 993 (or plurality thereof) executing processing instructions (a program) stored on a memory 994 and exchanging data via a network I/F 997 or other input/output mechanism. In particular, the processor 993 executes processing instructions to receive, via the network I/F or other input/output mechanism, the selection of attribute pairs, the matching pairs of data items from the first data storage area, and the non-matching pairs of data items from the second data storage area 103, and to store the untrained data item distance metric calculator, and execute the forming and solving of the optimisation problem, as in steps S105 to S107 of Figure 1. Furthermore, the processor 993 may execute processing instructions to compose the set of core attributes and configure the data item distance metric calculator with the core set of attributes and respective optimal weightings, as in steps S108 and S109 of Figure 1, and to store the configured data item distance metric calculator on a connected storage unit and/or to transmit, via the network I/F 997 or other input/output mechanism, the configured data item distance metric calculator to the configured data item distance metric calculator executor 105 for executing on the reconciliation candidate pairs.

The configured data item distance metric calculator executor 105 of Figure 3 may include a processor 993 (or plurality thereof) executing processing instructions (a program) stored on a memory 994 and exchanging data via a network I/F 997 or other input/output mechanism. In particular, the processor 993 executes processing instructions to receive, via the network I/F, reconciliation candidate pairs of data items from the storage area 101 and the configured data item distance metric calculator from the controller 104, and to execute the configured data item distance metric calculator on the reconciliation candidate pairs, as in step S110 of Figure 1. Furthermore, the processor 993 may execute processing instructions to output the reconciliation candidate pairs selected from reconciling processing to the pair reconciling processor via the network I/F 997 or other input/output mechanism.

The data storage 50 of Figure 3 may include a processor 993 (or plurality thereof) for executing pair reconciling processing (i.e. a pair reconciling processor) executing processing instructions (a program) stored on a memory 994 and exchanging data via a network I/F 997 or other input/output mechanism. In particular, the processor 993 executes processing instructions to receive, via the network I/F or other input/output mechanism, reconciliation candidate pairs from the configured data item distance metric calculator executor 105, either for independent storage (i.e. the calculated distance metric was above the threshold) or for storage as a reconciled pair (i.e. the calculated distance metric was below the threshold) following processing by the pair reconciling processor (which processing may be, for example, consolidating the two data items to a single data item) as in method step S111 of Figure 1.

Methods embodying the present invention may be implemented by a computing device such as that illustrated in Figure 4. Such a computing device need not have every component illustrated in Figure 4, and may be composed of a subset of those components. A method embodying the present invention may be carried out by a single computing device in communication with one or more data storage servers via a network. The computing device may be a data storage itself storing the combined data from the two data sources following processing by the reconciliation processor 10.

A method embodying the present invention may be carried out by a plurality of computing devices operating in cooperation with one another. One or more of the plurality of computing devices may be a data storage server storing at least a portion of the combined data from the two data sources following processing by the reconciliation processor 10.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A computer-implemented method for reconciling data items from two distinct data sources, wherein each of the data sources comprises a plurality of data items representing respective entities with values of attributes from among a set of attributes forming a schema of the respective data source;

   receiving [as an input] a plurality of designations of pairs of data items that represent the same entity, each designated pair comprising a data item from each of the data sources;

   storing the designated pairs in a first storage area;

   obtaining a selection denoting comparable attribute pairs each comprising an individual attribute in the schema of one data source and a respective comparable individual attribute in the schema of the other data source;

   storing in a second storage area a set of data items from each of the two data sources as a negative set, the number of data items in each negative set being a predefined number of times larger than the number of pairs of data items stored in the first storage area;

   storing a data item distance metric calculator, configured to calculate a data item distance metric between two input data items, one from each data source, by, for each of a set of attribute pairs, calculating an attribute pair distance metric between the value of each of the attribute pair in the data item from the respective data source; and aggregating the attribute pair distance metrics by weighting with a respective attribute pair weighting and summing each of the attribute pair distance metrics;

   forming an optimisation problem with the attribute pair weightings as variables, the optimisation problem being: to minimise the data item distance metric between the designated pairs of data items in the first storage area as input data items, and to maximise the data item distance metric between a predetermined number of pairs of data items each comprising a data item from one of the data sources stored in the first storage area and a data item from the other of the data sources stored in the second storage area as input data items, using the data item distance metric calculator with each of the comparable attribute pairs from the mapping as the set of attribute pairs;

   solving the optimisation problem to arrive at an optimum set of attribute pair weightings;

   composing a set of core attribute pairs comprising each of the comparable attribute pairs from the mapping for which the optimum attribute pair weighting is either above a predefined threshold or among the top n optimum attribute pair weightings ranked by value;

   configuring the stored data item distance metric calculator by setting the individual weightings for the attribute distance metrics of the set of core attributes pairs to the respective optimum attribute pair weightings, and

   using the configured data item distance metric calculator with the set of core attribute pairs as the set of attribute pairs to calculate the data item distance metric between each reconciliation candidate pair from a list of reconciliation candidate pairs, each reconciliation candidate pair comprising one data item from each data source; and to reconcile the pair if the calculated data item distance metric is below a predefined threshold.

2. A computer-implemented method according to claim 1, wherein
   one of the data sources is a distributed data source comprising data items stored in a distributed manner across a plurality of physically distinct data storage units;
   reconciling the pair comprises adding to the distributed data source in the same data storage unit as the one of the pair of data items from the distributed data source, the data item from the other data source.

3. A computer-implemented method according to claim 2, wherein
upon reconciling the pair the attribute values from the data item from the other data source are mapped to attributes in the schema of the distributed data source according to the mapped attribute pairs in a mapping;
the mapping being obtained from a user-defined list of equivalent attribute pairs, each equivalent attribute list comprising one attribute from the schema of each data source.

4. A computer-implemented method according to any of claims 1 to 3, further comprising:

   extracting data items from both of the two distinct data sources and writing the extracted data items to a combined database; wherein
   reconciling the pair comprises adding the pair of data items to the combined database as a single consolidated entry; and
   the single consolidated entry is accessible at a single physical data storage location or address; and/or the single consolidated entry occupies less physical data storage space than the pair of data items.

5. A computer-implemented method according to claim 3 or 4, wherein
writing the pair of data items to the combined database as a single consolidated entry comprises, when only one or the other of the data items have a value for an attribute of a mapped attribute pair from the mapping, writing the value to the equivalent attribute in the combined database, and, when both data items have a value for a mapped attribute pair from the mapping, receiving a selection of one from the two values and writing the selected one value to the combined database; or
writing the pair of data items to the combined database comprises writing a separate entry for each data item, and replacing physical data of one of the entries with a physical or logical link to the other.

6. A computer-implemented method according to any of claims 1 to 5, wherein:

   the selection of comparable attribute pairs is every permutation of attribute pairs comprising one attribute from the schema of each data source; or
   the selection of comparable attribute pairs is a user-defined, by a user of the computer implementing the method, selection of equivalent attribute pairs, each equivalent attribute pair comprising an attribute from the schema of one data source and a semantically equivalent attribute from the schema of the other data source.

7. A computer-implemented method according to claim 6, comprising:

   setting the user-defined equivalent attribute pairs as the mappings.

8. A computer-implemented method according to claim 1, wherein:

   the designated pairs are manually designated by a user of the computer implementing the method.

9. A computer-implemented method according to claim 1, further comprising:

   extracting the data items from the two data sources and storing the extracted data items in a cache memory; wherein
   storing data items in the first storage area and storing data items in the second storage area comprises reading the data items from the cache memory and writing the data items into a persistent data storage hardware resource.

10. A computer-implemented method according to claim 1, wherein
the list of reconciliation candidate pairs is all permutations of data item pairs comprising one data item from each of the two data sources.

11. A computer-implemented method according to claim 1, wherein
the list of reconciliation candidate pairs is pairs of data items, comprising one data item from each of the two data sources, denoted as equivalent to one another by an initial reconciliation process.

12. A computer program which, when executed by a computing device, cause the computing device to execute a method according to any of claims 1 to 11.

13. A non-transitory computer-readable medium storing the computer program of claim 12.

14. A computing apparatus for reconciling data items from two distinct data sources, wherein each of the data sources comprises a plurality of data items representing respective entities with values of attributes from among a set of attributes forming a schema of the respective data source; the computing apparatus comprising:

a pair designation interface configured to receive a plurality of designations of pairs of data items that represent the same entity, each designated pair comprising one data item from each of the data sources;

a first storage area configured to store the designated pairs of data items;

a second storage area configured to store a set of data items from each of the two data sources as a negative set, the number of data items in each negative set being a predefined number of times larger than the number of pairs of data items stored in the first storage area;

a data item distance metric calculator controller, configured to:

obtain a selection denoting comparable attribute pairs each comprising an individual attribute in the schema of one data source and a respective comparable individual attribute in the schema of the other data source;

store a data item distance metric calculator, configured to calculate a data item distance metric between two input data items, one from each data source, by, for each of a set of attribute pairs, calculating an attribute pair distance metric between the value of each of the attribute pair in the data item from the respective data source, and aggregating the attribute pair distance metrics by weighting with a respective attribute pair weighting and summing each of the attribute pair distance metrics;

form an optimisation problem with the attribute pair weightings as variables, the optimisation problem being: to minimise the data item distance metric between the designated pairs of data items in the first storage area as input data items, and to maximise the data item distance metric between a predetermined number of pairs of data items each comprising a data item from one of the data sources stored in the first storage area and a data item from the other of the data sources stored in the second storage area as input data items, using the data item distance metric calculator with each of the comparable attribute pairs from the mapping as the set of attribute pairs;

solve the optimisation problem to arrive at an optimum set of attribute pair weightings;

compose a set of core attribute pairs comprising each of the comparable attribute pairs from the mapping for which the optimum attribute pair weighting is either above a predefined threshold or among the top n optimum attribute pair weightings ranked by value;

configure the stored data item distance metric calculator by setting the individual weightings for the attribute distance metrics of the set of core attributes pairs to the respective optimum attribute pair weightings, and

a configured data item distance metric calculator executor, configured to use the configured data item distance metric calculator with the set of core attribute pairs as the set of attribute pairs to calculate the data item distance metric between each reconciliation candidate pair from a list of reconciliation candidate pairs, each reconciliation candidate pair comprising one data item from each data source; and

a data item pair reconciling processor configured to reconcile the pair if the calculated data item distance metric is below a predefined threshold.

FIGURE 1

FIGURE 2

FIGURE 3

```
┌─────────────────────┐          ┌─────────────────────┐
│ PROCESSOR           │          │ MEMORY              │
│                     │          │                     │
│                     │          │                     │
│                 993 │          │                 994 │
└──────────┬──────────┘          └──────────┬──────────┘
           │                                │
───────────┴────────────────────────────────┴─────────────────  992
───────┬──────────────────────┬──────────────────────┬─────────
       │                      │                      │
┌──────┴──────────┐   ┌───────┴─────────┐   ┌────────┴────────┐
│             995 │   │            996  │   │            997  │
│                 │   │                 │   │                 │
│ DISPLAY         │   │ INPUT           │   │ NETWORK I/F     │
└─────────────────┘   └─────────────────┘   └─────────────────┘
```

# FIGURE 4

Europäisches
Patentamt

European
Patent Office

Office européen
des brevets

# EUROPEAN SEARCH REPORT

Application Number

EP 17 15 5703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/077093 A1 (SARMA JOYDEEP SEN [US] ET AL) 19 March 2009 (2009-03-19) * paragraph [0073]; figure 8 * ----- | 1-14 | INV. G06F17/30 |

TECHNICAL FIELDS
SEARCHED      (IPC)

G06F

The present search report has been drawn up for all claims

| Place of search | Date of completion of the search | Examiner |
|---|---|---|
| Munich | 21 July 2017 | Krawaritis, Achilles |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 15 5703

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2017

| Patent document cited in search report | Publication date | Patent family member(s) | Publication date |
|---|---|---|---|
| US 2009077093 A1 | 19-03-2009 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2536898 A

- GB 1505427 A